(19) Europäisches Patentamt
European Patent Office
Office européen des brevets

(11) EP 1 133 231 B1

(12) **EUROPEAN PATENT SPECIFICATION**

(45) Date of publication and mention of the grant of the patent:
**29.10.2003 Bulletin 2003/44**

(21) Application number: **99972072.5**

(22) Date of filing: **16.11.1999**

(51) Int Cl.7: **A01N 43/80**, A01N 47/44

(86) International application number:
**PCT/KR99/00687**

(87) International publication number:
**WO 00/028823 (25.05.2000 Gazette 2000/21)**

(54) **BIOCIDE COMPOSITION AND STERILIZATION METHOD USING THE SAME**

BIOZIDZUSAMMENSETZUNG UND DIESE VERWENDENDES STERILISATIONSVERFAHREN

COMPOSITION BIOCIDE ET METHODE DE STERILISATION L'UTILISANT

(84) Designated Contracting States:
**AT BE CH CY DE DK ES FI FR GB GR IE IT LI LU MC NL PT SE**

(30) Priority: **16.11.1998 KR 9849095**

(43) Date of publication of application:
**19.09.2001 Bulletin 2001/38**

(73) Proprietor: **SK Chemicals Co., Ltd.**
**Suwon-si, Kyungki-do 440-301 (KR)**

(72) Inventors:
- **CHOI, Ki-Seung**
  **Uiwang-city, Kyungki-do 437-070 (KR)**
- **KIM, Jin-Man**
  **Suwon-city, Kyungki-do 440-320 (KR)**
- **PARK, Jeong-Ho**
  **Suwon-city, Kyungki-do 440-301 (KR)**
- **CHO, Myung-Ho**
  **Suwon-city, Kyungki-do 441-390 (KR)**
- **HAHN, Soon-Jong**
  **Kwanak-ku, Seoul 151-053 (KR)**

(74) Representative:
**Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) References cited:
- **DATABASE WPI Week 199836, Derwent Publications Ltd., London, GB; Class A97, AN 1998-422258, XP002949830 & JP 10 175 809 A (NAGASE KASEI KOGYO KK)**

Remarks:
The file contains technical information submitted after the application was filed and not included in this specification

EP 1 133 231 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

### (a) Field of the Invention

The present invention relates to a biocide composition, more particularly to a biocide composition having synergistic effects by comprising 3-isothiazolone and polyhexamethyleneguanidine phosphate and a method for sterilizing microorganisms, fungi, etc. using the same.

### (b) Description of the Related Art

Microorganisms, bacteria, mold, algae, etc. grow in industrial water such as cooling water, wastewater, emulsifiers used in the textile industry, etc. and have a deteriorating effective on the operations of industrial processes. Such microorganisms propagate using organisms contained in the industrial water as a nutrient source and secrete polysaccharides. Varieties of organic and inorganic substances combined with these secreted polysaccharides and form viscous lumps or masses also called slime. Organic materials such as cellulose, hemicellulose, and the fibrin of white water in paper industry in particular provide to have sufficient nutrient sources for such microorganisms. The slime formed at areas of low fluid flow in a paper processing process results in both direct and indirect losses, such as manufacturing time loss, equipment efficiency deterioration, etc. due to the deterioration of pulp quality, etc. Furthermore, the growth of microorganisms at such places like a cooling water facility, where much water is contained or recirculated causes a fouling phenomena. This deteriorates heat transfer efficiency in an industrial cooling tower, as well as corrodes metal or erodes wooden parts.

Bacteria such as taloblastic prokaryotes can propagate by decomposing various types of organisms, some of which are the sources of the microbiogically induced corrosion, by secreting and discharging polysaccharides forming a biofilm. Fungi such as eukaryote can also propagate by decomposing various types of organisms like bacteria, and some types of fungi secreting cellulase are the sources for discoloration and decomposition of wooden parts by way of degrading the fibroid materials of wooden parts of a cooling tower, etc.

Algae, such as eukaryote, can propagate by photosynthesizing under an environment with light, air, and a small amount of organisms, and carbohydrate formed from algae is used as a nutrient source for other microorganisms such as bacteria and fungi, thereby accelerating the fouling phenomena. Algal fouling due to algae propagation is intensified at places that are exposed to sunlight, particularly in cooling water facilities, swimming pools, etc. This phenomena results in clogging which blocks water pipes, as well as the deterioration of heat transfer efficiency, oxidization of metal surfaces by the generation of oxygen, and the promotion of corrosion at a holes on metallic surfaces through a partial galvanic reaction when the organism dies.

Various biocides are being developed in order to kill such microorganisms, fungi, algae, etc. or to prevent their surface adhesion to metal, etc. These biocides are generally divided into oxidant biocides and non-oxidant biocides. The oxidant biocides that are mainly used are halogen compounds such as chlorine, bromine, etc. that are popular due to their economic advantage of strong oxidation capability and low price. However, they can cause erosion of the wooden parts of cooling towers and metallic decomposition, and their sterilizing efficiency tends to deteriorate as they can be easily being discharged into atmosphere. Furthermore, their practical effectiveness is poor due their peculiar way of first reacting with secreted polysaccharides before they react with microorganisms that are the actual sources of biofilm formation.

Non-oxidant biocides which overcome these disadvantages include 3-isothiazolone, quaternary ammonium salt, formaldehyde emission compound, glutaraldehyde, etc. and are mainly used separately. Although 3-isothiazolone, which is disclosed in United States Patent Nos. 3,761,488, 4,105,431, 4,279,762, etc., has a high sterilizing effect and wide antibiotic spectrum, it has a disadvantage in that its immediate instantaneous sterilizing effects are low. Furthermore, Korean Patent Application No. 89-20381 discloses an antiseptic composition useful in preventing circulation water putrefaction wherein a biocides 5-chloro-2-methyl-4-isothiazolone-3-on and 2-methyl-4-isothiazolone-3-on are mixed in a ratio of about 3:1 and wherein this antiseptic composition further comprises didecyldimethylammoniumchloride. United States Patent No. 4,379,137 discloses a method for improving sterilizing capability by mixing polymer quaternary ammonium salt and 3-isothiazolone. However, since these mixtures emit corrosive materials, i.e., halogen compounds such as fluorine, chlorine, etc., it is difficult for them to be applied where metals susceptible to corrosion are used, such as carbon steel, cast iron, stainless steel, copper, etc.

Additionally, Korean Patent Application No. 97-80170 discloses a process that can be applied even when metals susceptible to corrosion are used since the disclosed process does not emit a halogen compound. Another water soluble biocide composition having synergistic effects comprising 3-isothiazolone, which has high sterilizing effect on quartemary ammonium phosphate and microorganisms, is disclosed in Korean Patent Application No.

97-46517 as a biocide having superior properties of immediate sterilizing effects on microorganisms, durability, anticorrosiveness, etc. However, there is a problem in applying this invention to various industrial fields due to the issues such as bubbling or foaming, etc. when quaternary ammonium is added to provide immediate effectiveness to the 3-isothiazolone.

Document JP-A-10175809 discloses biocide composition based on 2-n-octyl-4-isothiazolin-3-one and polyhexamethylene biguanidine hydrochloride.

Furthermore, while polyhexamethyleneguanidine phosphate has immediate effectiveness, and is used in the effective and wide control of microorganisms in various industrial fields, including water treatment, as well as exhibiting low foaming properties, it has a disadvantage of not having a wide antibiotic spectrum by itself.

## SUMMARY OF THE INVENTION

It is an object of the present invention to provide a biocide composition which can be used in the process where metals susceptible to corrosion are used, such as carbon steel, cast iron, stainless steel, copper, etc., as well as which has high sterilizing capability, a wide antibiotic spectrum, and superior antiseptic effects.

It is an other object of the present invention to provide a biocide composition which can not only be applied to various industrial processes on account of its low foaming features, but also which has a high. sterilizing capability even when a small amount is used.

The present invention provides a biocide composition comprising 3-isothiazolone of the following General Formula 1 and polyhexamethyleneguanidine phosphate of the following General Formula 2 in order to accomplish the above objects:

[General Formula 1]

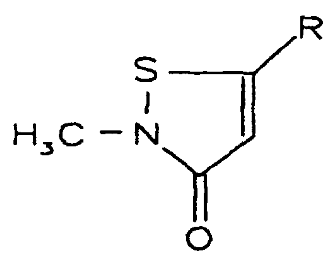

[General Formula 2]

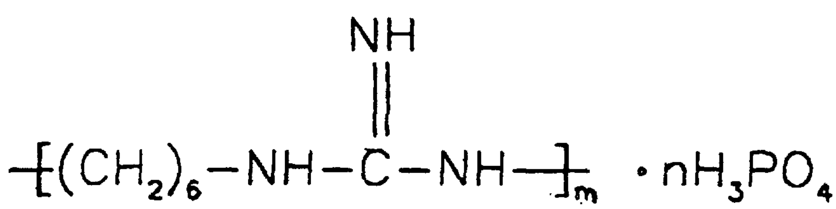

where R is hydrogen or chlorine in the above General Formula 1 in the above General Formula 1, m is integer from 4 to 7, and n is an integer from 1 to 14 in the above General Formula 2. The present invention further provides a sterilizing method which kills or restrains the growth of bacteria, fungi or algae by inputting the above biocide composition into a media that is contaminated by bacteria, fungi, and algae.

## DETAILED DESCRIPTION OF THE PREFERRED EMBODIMENTS

In the following detailed description, only the preferred embodiments of the invention have been shown and

described, simply by way of illustration of the best mode contemplated by the inventor(s) of carrying out the invention.

The present invention is described in detail below.

The present invention provides an antiseptic and/or biocide composition comprising 3-isothiazolone of the below General Formula 1 and polyhexamethyleneguanidine phosphate of the below General Formula 2:

[General Formula 1]

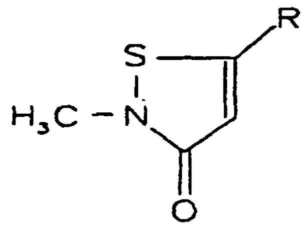

[General Formula 2]

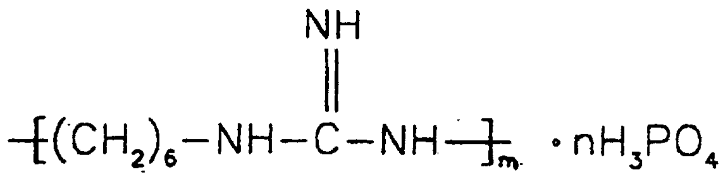

where R is hydrogen or chlorine in the above General Formula 1 in the above General Formula 1, m is integer from 4 to 7, and n is an integer from 1 to 14 in the above General Formula 2.

In the above General Formulae, 3-isothiazolone is preferably 2-methyl-4-isothiazolone-3-on having R group of hydrogen or 5-chloro-2-methyl-4-isothiazolone-3-on having R group of chlorine, and more preferably a mixture in which 2-methyl-4-isothiazolone-3-on and 5-chloro-2-methyl-4-isothiazolone-3-on are mixed in a weight ratio of 1:20 to 20:1. If the above ratio of 3-isothiazolone compound is out of the range of 1:20 to 20:1, the sterilizing effects are deteriorated.

The mixing ratio of the above 3-isothiazolone and polyhexamethyleneguanidine phosphate is preferably a weight ratio of 1:1 to 1:65, more preferably 1:1 to 1:4. If the above mixing ratio of 3-isothiazolone and polyhexamethyleneguanidine phosphate is out of the above range, the synergistic effects by the mixture of two biocides are deteriorated or not seen.

If the present invention of a mixture of 3-isothiazolone and polyhexamethyleneguanidine phosphate are used as a biocide composition, 3-isothiazolone compensates for the disadvantage in the low sterilizing effects of polyhexamethyleneguanidine phosphate on fungi and some bacteria, while polyhexamethyleneguanidine phosphate compensates for the disadvantage of 3-isothiazolone has in its low initial and immediate sterilizing capability and effectiveness. Synergistic effects are seen in that the sterilizing action of a mixed biocide becomes greater than the sum of the sterilizing action that each component compound has. That is, the present invention of a composition can restrain microorganisms more widely and effectively by mixing the two types of compounds having different sterilizing mechanisms, and obtains further effects such as the lowering of an emergence frequency of resistant strains more than in the case of using a single component compound.

A biocide composition of the present invention is preferably used in an aqueous solution and more preferably used by putting 5 to 1,000 parts per million (ppm) of it into cooling water, etc. in which the microorganisms exist, although the amount used has no limit as long as it achieves the targetted sterilizing effects. A biocide composition of the present invention can be used in controlling microorganisms widely and effectively in the various industrial fields such as in pulp and paper plants, cooling towers, as a disinfectant, etc.. In particular, it can be used by adding it to the cooling water of an industrial process, to disinfectant, paint, latex antiseptic, cosmetic additives, additives for emulsion products such as shampoo, etc., slime control chemicals for textile weaving, paper slime control agent, and antiseptics for leather

goods, metal processing oil, etc.

COMPARATIVE EXAMPLES for helping in gaining in an understanding of the present invention and preferable EXAMPLES are described below.

[EXAMPLES 1-6]

The sterilizing effects of 3-isothiazolone and polyhexamethyleneguanidine phosphate on a mixed solution of 8 types of bacteria (Enterobacter aerogens ATCC 13048, Escherichia coli ATCC 11229, Micrococcus luteus ATCC 9341, Pseudomonas aeruginosa ATCC 15442, Klebsiella pneumoniae ATCC 1560, Staphylococcus epidermis ATCC 155, Staphylococcus aureus ATCC 6538, and Bacillus subtilis ATCC 6984) were tested using Tryptic Soy Broth manufactured by Difco Corporation according to the two fold dilution method. The minimum inhibiting concentration of each biocideand mixtures thereof were determined by observation with the naked eye of the degree of muddiness of the lowest concentration in which growth was deteriorated after culturing a culture fluid in which biocides and microorganisms are added at 30 degrees centigrade for 3 days.

It was determined that a synergistic effect of a biocide was seen when the sum of QA/Qa and QB/Qb was less than 1, as in the following EQUATION according to the method published in the paper of Kull, F. C. et al (Appl. Microbiol. 9:53 8~544 (1961)), and these results are represented in Table 1:

$$\text{Synergistic Index (SI)} = (QA/Qa) + (QB/Qb)$$

where Qa and Qb are MIC values (ppm) of a single compound A and single compound B, respectively, and QA and QB are MIC values (ppm) of the compounds A and B, respectively, out of each mixture.

[Table 1]

| | Qa | Qb | QA | QB | QA/Qa | QB/Qb | SI |
|---|---|---|---|---|---|---|---|
| EXAMPLE 1 | 18.8 | 312.5 | 9.4 | 9.8 | 0.5 | 0.03 | 0.53 |
| EXAMPLE 2 | 18.8 | 312.5 | 9.4 | 19.5 | 0.5 | 0.06 | 0.56 |
| EXAMPLE 3 | 18.8 | 312.5 | 9.4 | 39.1 | 0.5 | 0.13 | 0.63 |
| EXAMPLE 4 | 18.8 | 312.5 | 9.4 | 78.1 | 0.5 | 0.25 | 0.75 |
| EXAMPLE 5 | 18.8 | 312.5 | 9.4 | 156.3 | 0.5 | 0.50 | 1.0 |
| EXAMPLE 6 | 18.8 | 312.5 | 2.4 | 156.3 | 0.13 | 0.50 | 0.63 |

Qa : MIC value (ppm) on the mixed strain of a single 3-isothiazolone;
Qb : MIC value (ppm) on the mixed strain of a single poly-hexamethyleneguanidine phosphate;
QA : MIC value (ppm) of 3-isothiazolone out of a mixture;
QB : MIC value (ppm) of polyhexamethyleneguanidine out of a mixture.

As represented in the above Table 1, it can be seen that the same microorganism killing effect (SI was 0.53 in EXAMPLE 1) can be obtained even though only a half amount of 3-isothiazolone is used and the amount of polyhexamethyleneguanidine phosphate used is reduced to 9.8 ppm. The same microorganism killing effect (SI was 0.63 in EXAMPLE 6) can also be obtained even though only a half amount of polyhexamethyleneguanidine phosphate is used and only 2.4 ppm of 3-isothiazolone is used. Therefore, it can be shown that a mixture of the above two compounds can inhibit the growth of bacteria more effectively than the single use of each of the two compounds, and the synergistic action ratio of 3-isothiazolone and polyhexamethyleneguanidine phosphate is most preferable in the range of 1:1 to 1:4, where SI is from 0.53 to 0.63.

[TEST EXAMPLE 1 AND COMPARATIVE EXAMPLE 1]

The minimum inhibition concentration (MIC) - values of a bioeide composition in which 3-isothiazolone and polyhexamethyleneguanidine phosphate are mixed in a ratio of 1:4 (1 wt% of 3-isothiazolone and 15 wt% of 25 wt% poly-hexamethyleneguanidine phosphate) and of a single biocide of 1.5 wt% 3-isothiazolone were measured on 7 types of individual strains. After diluting a biocide using 96 multi wall plates according to the two fold continuous dilution method, microorganisms were inoculated at a concentration of 104 CFU/ml. Then, after culturing at 30 degrees centigrade for 48 hours, the MIC values were measured by observation with the naked eye of the growth of microorganisms on the basis of muddiness. The results are represented in Table 2.

The muddiness was observed using Tryptic Soy Broth manufactured by Difco Corporation as a medium in order to measure MIC values and strains of Enterobacter aerogens ATCC 13048, Staphylococcus aureus ATCC 6538, Staphylococcus epidermis ATCC 155, Bacillus subtilis ATCC 6984, Saccharomyces cerevisiae ATCC 9763, Rhizopus oryzae ATCC 10404, Aspergillus niger ATCC 9642 were used from among the strains which were used in EXAMPLE 1.

[Table 2]

| MIC test results on microorganisms of a biocide mixture and a single biocide of 1.5 wt% 3-isothiazolone (units: ppm): | | |
|---|---|---|
| Strains Used | COMPARATIVE EXAMPLE (1.5% isothiazolone) | TEST EXAMPLE (Biocide mixture) |
| Enterobacter aerogens ATCC 13048 | 390 | 195 |
| Staphylococcus aureus ATCC 6538 | 195 | 195 |
| Staphylococcus epidermis ATCC 155 | 390 | 97 |
| Bacillus subtilis ATCC 6984 | 390 | 195 |
| Saccharomyces cerevisiae ATCC 9763 | 390 | 390 |
| Rhizopus oryzae ATCC 10404 | 390 | 195 |
| Aspergillus niger ATCC 9642 | 195 | 195 |

As can be shown from the above Table 2, a biocide mixture in which 3-isothiazolone and 25 wt% polyhexamethyleneguanidine phosphate are mixed using the synergistic index is much more effective in controlling microorganisms than is a biocide with a single component of 1.5 wt% 3-isothiazolone.

[TEST EXAMPLE 2 AND COMPARATIVE EXAMPLE 2]

In order to determine the killing time to kill microorganisms when the biocide mixture used in TEST EXAMPLE 1 and 1.5% 3-isothiazolone that was used in COMPARATIVE EXAMPLE. 1, measurements were made of the immediate effectiveness, the durability, and the number of strains by taking a strain solution at times corresponding to 0 hours, 3 hours, 24 hours, 48 hours, 72 hours, and 96 hours after respectively putting in 50, 100, and 200 ppm of a biocide mixture and 1.5% 3-isothiazolone into the cooling water of a polymerization cooling tower having a microorganism concentration of about 104 CFU/ml.., A solution in which a biocide was not added was used as a blank. The measured results on the strain reduction ratios according to the time when the biocide mixture in which 3-isothiazolone and polyhexamethyleneguanidine phosphate was mixed are presented using a synergistic index, as well as data for single component biocide of 1.5 wt% 3-isothiazolone, are represented in Table 3 and Table 4.

[Table 3]

| Measured results on the reduction ratio of microorganisms according to the concentration of a biocide mixture verses time (units: CFU/ml): | | | | | | | |
|---|---|---|---|---|---|---|---|
| | | 0 | 3 hours | 24 hours | 48 hours | 72 hours | 96 hours |
| Blank | | 13,000 | > 13,000 | > 13,000 | > 13,000 | > 13,000 | > 13,000 |
| Biocide mixture | 50 ppm | 13,000 | 210 | 140 | 90 | 40 | 50 |
| | 100 ppm | 13,000 | 80 | 170 | 90 | 50 | 30 |
| | 200 ppm | 13,000 | 50 | 90 | 50 | 40 | 50 |

[Table 4]

| Measured results on the reduction ratio of microorganisms according to the concentration verses time of 1.5 wt% of 3-isothiazolone (units: CFU/ml): | | | | | | | |
|---|---|---|---|---|---|---|---|
| | | 0 | 3 hours | 24 hours | 48 hours | 72 hours | 96 hours |
| Blank | | 13,000 | > 13,000 | > 13,000 | > 13,000 | > 13,000 | > 13,000 |
| 1.5 wt% of isothiazolone | 50 ppm | 13,000 | 12,000 | 450 | > 10,000 | > 10,000 | > 10,000 |
| | 100 ppm | 13,000 | 11,400 | 370 | 6,250 | > 10,000 | > 10,000 |
| | 200 ppm | 13,000 | 5,300 | 200 | 2,100 | > 10,000 | > 10,000 |

As can be shown in the above Table 3 and Table 4, the single compound 1.5 wt% of 3-isothiazolone biocide shows sterilizing capability after 24 hours, while the immediate effectiveness is low and there is also a secondary propagation of microorganisms after 48 hours. The biocide mixture of 3-isothiazolone and polyhexamethyleneguanidine phosphate achieves synergistic effects as seen in immediate effectiveness, durability, and superior sterilizing effects on microorganisms as compared to the single component biocide. Therefore, it can be shown that when 3-isothiazolone and polyhexamethyleneguanidine phosphate are mixed, the disadvantage of 3-isothiazolone with immediate effectiveness and the problems of polyhexamethyleneguanidine phosphate associated with antibiotic spectrum are mutually compensated, and sterilizing capability is correlated with a synergistic effect index.

As described in the above, a biocide composition of the present invention can be effectively used in the wide control of microorganisms in various industrial fields such as water treatment, disinfectants, etc., since it has immediate effectiveness and durability, as well as applicability to a wide antibiotic spectrum. Furthermore, a biocide composition of the present invention can effectively control industrial water microorganism contamination and the actual living environment of the microorganisms since it is more effective in controlling the microorganisms and has greater immediate sterilizing capability than does a single compound biocide. A biocide composition of the present invention has an effect to lower the emergence frequency of a resistant strain as compared a single compound biocide, achieving this using a mixture of biocides having the different working mechanism.

## Claims

1. A biocide composition comprising 3-isothiazolone of the following General Formula 1 and polyhexamethyleneguanidine phosphate of the following General Formula 2:

[General Formula 1]

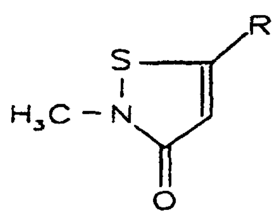

[General Formula 2]

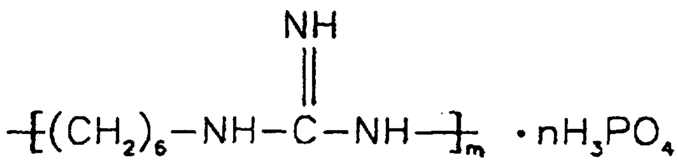

where R is hydrogen or chlorine in the above General Formula 1, m is an integer from 4 to 7 and n is an integer from 1 to 14 in the above General Formula 2.

2. A biocide composition in accordance with claim 1 wherein, the mixing ratio of the above 3-isothiazolone and polyhexamethyleneguanidine phosphate. is a weight ratio of 1:1 to 1:65.

3. A biocide composition in accordance with claim 1 wherein, the above 3-isothiazolone is a mixture in which 3-isothiazolone having R of hydrogen and 3-isothiazolone having R of chlorine are mixed in a weight ratio of 1:20 to 20:1 and the mixing ratio of the above 3-isothiazolone and polyhexamethyleneguanidine phosphate is from 1:1 to 1:4.

4. A biocide composition in accordance with claim 1 **characterized in that** before the use of the above biocide composition, it is mixed with a media selected from the group consisting of cooling water of an industrial process, disinfectant, paint, antiseptic for latex, additives for cosmetics, additives for emulsion products, slime control chemicals for textile weaving, paper slime control agent, antiseptic for leather goods, and antiseptic for metal processing oil.

5. A sterilizing method of killing or restraining the growth of bacteria, fungi and/or algae by putting a biocide composition of claim 1 into the area that is contaminated by bacteria, fungi and/or algae.

**Patentansprüche**

1. Biozidzusammensetzung, umfassend 3-Isothiazolon gemäß der folgenden allgemeinen Formel 1 und Polyhexamethylenguanidinphosphat gemäß der folgenden allgemeinen Formel 2:

[Allgemeine Formel 1]

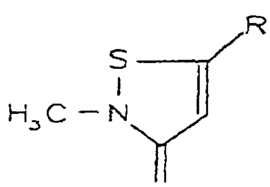

[Allgemeine Formel 2]

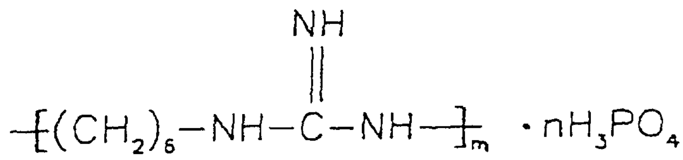

wobei R Wasserstoff oder Chlor in der obigen allgemeinen Formel 1 ist, m eine ganze Zahl von 4 bis 7 ist, und n eine ganze Zahl von 1 bis 14 in obiger allgemeiner Formel 2 ist.

2. Biozidzusammensetzung nach Anspruch 1, wobei das Mischverhältnis des obigen 3-Isothiazolons und Polyhexamethylenguanidinphosphates ein Gewichtsverhältnis von 1:1 bis 1:65 beträgt.

3. Biozidzusammensetzung nach Anspruch 1, wobei das obige 3-Isothiazolon eine Mischung ist, in welcher 3-Isothiazolon mit R = Wasserstoff und 3-Isothiazolon mit R = Chlor in einem Gewichtverhältnis von 1:20 bis 20:1 gemischt werden und das Mischungsverhältnis des obigen 3-Isothiazolons und Polyhexamethylenguanidinphosphates von 1:1 bis 1:4 beträgt.

4. Biozidzusammensetzung nach Anspruch 1, **dadurch gekennzeichnet, daß** vor der Verwendung der obigen Biozidzusammensetzung diese mit einem Medium gemischt wird, welches ausgewählt wird aus der Gruppe bestehend aus:

   Kühlwasser eines industriellen Verfahrens, Desinfektionsmittel, Farbe, Antiseptika für Latex, Kosmetik-Additive, Additive für Emulsionsprodukte, Chemikalien zur Schleimkontrolle zum Textilienweben, Mittel zur Papierschleimkontrolle, Antiseptika für Lederwaren und Antiseptika für Öl zur Metallverarbeitung.

5. Sterilisationsverfahren zum Töten oder zur Wachstumshemmung von Bakterien, Pilzen und/oder Algen durch Einbringen einer Biozidzusammensetzung gemäß Anspruch 1 in den Bereich, welcher durch Bakterien, Pilze und/oder Algen kontaminiert ist.

**Revendications**

1. Composition biocide comprenant de la 3-isothiazolone de la formule générale 1 suivante et du phosphate de polyhexaméthylène guanidine de la formule générale 2 suivante :

[Formule générale 1]

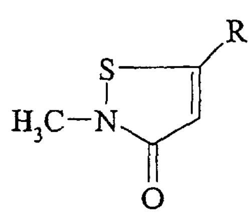

[Formule générale 2]

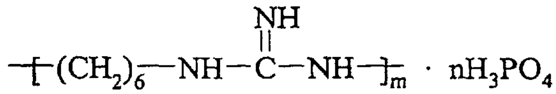

dans laquelle R est l'hydrogène ou le chlore dans la formule générale 1 ci-dessus, m est un nombre entier valant de 4 à 7 et n est un nombre entier valant de 1 à 14 dans la formule générale 2 ci-dessus.

**2.** Composition biocide selon la revendication 1, dans laquelle le rapport de mélange de la 3-isothiazolone et du phosphate de polyhexaméthylène guanidine ci-dessus est un rapport en poids de 1:1 à 1:65.

**3.** Composition biocide selon la revendication 1, dans laquelle la 3-isothiazolone ci-dessus est un mélange dans lequel une 3-isothiazolone où R est hydrogène et une 3-isothiazolone où R est chlore sont mélangées selon un rapport en poids de 1:20 à 20:1 et le rapport de mélange de la 3-isothiazolone et du phosphate de polyhexaméthylène guanidine ci-dessus est de 1:1 à 1:14.

**4.** Composition biocide selon la revendication 1, **caractérisée en ce que**, avant l'utilisation de la composition biocide ci-dessus, elle est mélangée avec un milieu choisi dans le groupe constitué par de l'eau de refroidissement d'un procédé industriel, un désinfectant, une peinture, un antiseptique pour le latex, des additifs pour des cosmétiques, des additifs pour des produits émulsionnés, des produits chimiques pour le contrôle de la viscosité pour le tissage de textiles, un agent pour le contrôle de la viscosité pour le papier, un antiseptiques pour des produits en cuir et un antiseptique pour de l'huile de traitement de métaux.

**5.** Procédé de stérilisation pour détruire ou limiter la croissance de bactéries, de champignons et/ou d'algues en plaçant une composition biocide selon la revendication 1 dans la zone qui est contaminée par les bactéries, les champignons et/ou les algues.